Europäisches Patentamt

European Patent Office

Office européen des brevets

(11) Publication number: **0 350 843 B1**

## EUROPEAN PATENT SPECIFICATION

(45) Date of publication of patent specification: **03.11.93**  (51) Int. Cl.⁵: **C08G 69/18**, C08G 65/48, C08K 5/29

(21) Application number: **89112599.9**

(22) Date of filing: **10.07.89**

(54) **Process for producing modified, impact-resistant polyamides.**

(30) Priority: **11.07.88 IT 2130988**

(43) Date of publication of application:
**17.01.90 Bulletin 90/03**

(45) Publication of the grant of the patent:
**03.11.93 Bulletin 93/44**

(84) Designated Contracting States:
**AT BE CH DE ES FR GB LI NL SE**

(56) References cited:
**EP-A- 0 043 928**
**EP-A- 0 204 118**
**FR-A- 2 121 712**

**CHEMICAL ABSTRACTS, vol. 101, no. 16, 15th
October 1984, page 47, abstract no. 131768h,
Columbus, Ohio, US; & JP-A-59 96 131**

(73) Proprietor: **ECP ENICHEM POLIMERI S.r.l.
16, Piazza della Repubblica
I-20124 Milano(IT)**

(72) Inventor: **Tonti, Sergio, Dr.-Chem.
8, via E. Toti
I-30173 Mestre Venezia(IT)**
Inventor: **Furlan, Piero, Dr.-Chem.
8/II, Borgo del Mestre
I-31100 Treviso(IT)**
Inventor: **Talamini, Gianpietro, Dr.-Chem.
171, via Oberdan
I-30173 Mestre Venezia(IT)**

(74) Representative: **Weinhold, Peter, Dr. et al
Patentanwälte Dr. V. Schmied-Kowarzik
Dipl.-Ing. G. Dannenberg
Dr. P. Weinhold
Dr. D. Gudel
Dipl.-Ing. S. Schubert
Dr. P.
Barz
Siegfriedstrasse 8
D-80803 München (DE)**

## Description

The present invention relates to a process for preparing modified polyamides showing an increased polymerisation rate by anionic polymerization of ω-lactams.

It is known that the anionic polymerisation of lactams which can be brought about by an alkali metal may be accelerated by means of an activator. A large number of compounds has been used as activators for the anionic polymerisation of lactams, among these nitrogen compounds, such as, e.g., acyllactams, substituted triazines, carbodiimides, cyanamides and isocyanates. Monofunctional as well as polyfunctional activators can be used for this purpose. For example, in Chemical Abstracts, vol. 101, no. 16 (1984), abstract no. 131768h, the use of hexamethylene diisocyanate is described for said purpose.

It is also known that polyfunctional activators allow to obtain higher molecular weights and partially crosslinked products.

The polyamides obtained according to this process display good mechanical strength properties, such as high tensile strength under traction, high flexural strength and high initial coefficient at traction, and are used as machine parts and industrial materials.

However, these polyamides show the drawback of having a low elongation strength and a low impact strength and are hard and fragile (brittle). Therefore, they cannot be used in fields in which a plastic character is required. Furthermore, their polymerisation rate is not particularly high, and above all is not very suitable for injection moulding (RIM technology).

Several proposals have been made heretofore directed at improving the elongation strength and the impact strength of polyamides obtained by alkaline polymerisation of ω-lactams and/or the polymerisation rate thereof.

For example, US-A-4,596,865 discloses a process for preparing a block copolymer of the nylon-6 type by starting from $\epsilon$-caprolactam, in which the polymerisation rate of $\epsilon$-caprolactam is increased by addition of 2-oxo-1-pyrrolidinyl compounds to the reaction mixture.

EP-A-204,118 discloses the reaction of already formed polyamides (possibly also partially crystalline) with monoisocyanates and precursors thereof, resulting in products showing improved rheological properties, a better impact strength and an easier release from the mould.

The object of the present invention is to provide a process for preparing, particularly in injection-moulding processes (RIM), a polyamide with a high polymerization rate said polyamide being preferably endowed with high impact strength and a sufficiently high elastic modulus at bending.

Such polyamides can be prepared by a process comprising the polymerization of an ω-lactam in the presence of:

a) a mixture of a diisocyanate and a monoisocyanate, the isocyanate groups of both types of isocyanates being blocked with an ω-lactam;

b) optionally, a polyoxyalkylene amine having an amine functionality of less than 3; and

c) an alkaline catalyst.

The addition of monoisocyanates and their precursors having the isocyanate groups blocked with an ω-lactam to the reaction mixture makes it possible to decrease the polymerization time of the ω-lactam by about 50%.

The polyoxyalkylene amines which may optionally be employed according to the present invention have an amine functionality of less than 3, and preferably from 1.5 to 2.9.

Such polyoxyalkylene amines can be prepared according to known methods, such as, e.g., amination of the corresponding hydroxypolyethers with ammonia, but can also be purchased. Preferably, they have a molecular weight of from 200 to 5000.

Particularly preferred for the purposes of the present invention are polyoxypropylene diamines and polyoxytetramethylene diamines, and even more preferred are polyoxypropylene diamines having a molecular weight of from 200 to 4000, such as, e.g., those marketed under the trade names JEFFAMINE® D 2000 and JEFFAMINE® D 4000.

Also useful are polyoxypropylene amines having an amine functionality of about 2.5 and a molecular weight of about 5000, which are marketed e.g. under the trade name JEFFAMINE® T 5000. Said commercial products are produced by Texaco Chemical Company.

The polyoxyalkylene amines are preferably used in amounts of from 1% to 40%, and particularly of from 5% to 30% by weight, based on the total amount of the reactants.

The ω-lactams used according to the present invention preferably are selected from: γ-butyrolactam, δ-valero-lactam, $\epsilon$-capro-lactam, ω-enantholactam, ω-capryl-lactam, ω-undecano-lactam and ω-lauryl-lactam, taken alone or in combination. $\epsilon$-Caprolactam and ω-lauryl-lactam are particularly preferred.

2

For the anionic polymerisation of the ω-lactams, several types of alkaline catalysts are known and used in catalytic amounts. Examples thereof include lactamates, alcolates (e.g. methanolates and ethanolates) and hydrides of alkali and alkaline earth metals (e.g. Na, K, Li, Ca and Mg); however, sodium, potassium and bromo-magnesium lactamates, usually dissolved in the ω-lactam, are preferably used. A solution of 15 to 25% by weight of sodium or potassium lactamate in ω-lactam is particularly preferred in the process according to the present invention.

The amount of catalyst usually ranges from 0.2 to 2 mol per 100 mol of ω-lactam, and preferably is from 0.25 to 1.5 mol per 100 mol of ω-lactam.

As activators for the anionic polymerization of ω-lactams isocyanates are used the isocyanate groups of which are blocked with an ω-lactam of the types specified above, obtained according to known methods.

The diisocyanates suitable for the intended purpose may be aliphatic, cycloaliphatic and aromatic diisocyanates, preferably having 2 to 20 carbon atoms (not including the -NCO groups), such as hexamethylene-diisocyanate (HDI), 2,2,4-trimethyl-hexamethylene-1,6-diisocyanate (TMDI), the trimers of hexamethylene-diisocyanate, para-phenylene-diisocyanate (PPDI), benzene-1,3-diisocyanate, toluene-diisocyanate (TDI), 1,1'-methylene-bis-(4-isocyanato-benzene) (MDI) and its polymers (PMDI); naphthalene-1,5-diisocyanate (NDI), 1,4-cyclohexane-diisocyanate (CHDI), 1,4-bis-(isocyanato-methyl)-cyclohexane (LDI), 1,3-bis-(isocyanato-methyl)-cyclohexane (H$_6$XDI), isophorone-diisocyanate, 1,1'-methylene-bis-(4-isocyanato-cyclohexane) (hydrogenated MDI), 4,4'-diisocyanato-3,3'-dimethyl-1,1'-biphenyl, 2,2,4,4-tetramethyl-hexane-1,6-diisocyanate, 1,3-bis-(isocyanto-methyl)-benzene, 1,6-cyclohexane-diisocyanate, 4,4'-diisocyanato-3,3'-dimethoxy-1,1'-biphenyl, 5-isocyanato-1-(isocyanato-methyl)-1,3,3-trimethyl-cyclohexane, etc., and mixtures thereof.

Examples of monoisocyanates suitable for the purposes of the present invention include aliphatic, cycloaliphatic and aromatic monoisocyanates, preferably containing from 1 to 20 carbon atoms (not-including the -NCO group), such as methyl-isocyanate, propyl-isocyanate, isopropyl-isocyanate, n-butyl-isocyanate, hexyl-isocyanate, cyclo-hexyl-isocyanate, 6-chloro-hexyl-isocyanate, n-octyl-isocyanate, 2-ethyl-hexyl-isocyanate, 2,3,4-trimethyl-cyclohexyl-isocyanate, 3,3,5-trimethyl-cyclo-hexyl-isocyanate, 2-norbornyl-methyl-isocyanate, decyl-isocyanate, dodecyl-isocyanate, tetradecyl-isocyanate, hexadecyl-isocyanate, octadecyl-isocyanate, 2-butoxy-propyl-isocyanate, 3-(2-ethyl-hexyl-oxy)-propyl-isocyanate, phenyl-isocyanate, toluyl-isocyanate, the chlorophenyl-isocyanates (the 2-, 3- and 4-isomers), 4-nitrophenyl-isocyanate, 3-trifluoromethyl-phenyl-isocyanate, benzyl-isocyanate, dimethyl-phenyl-isocyanate (the technical mixture and the individual isomers), dichloro-phenyl-isocyanate (the technical mixture and the individual isomers), 4-dodecyl-phenyl-isocyanate, 4-cyclo-hexyl-phenyl-isocyanate, 1-naphthyl-isocyanate, isocyanato-amides derived from 1 mol of a diisocyanate and 1 mol of a monocarboxylic acid (preferably from toluene-diisocyanate, diphenylmethane-diisocyanate and hexamethylene-diisocyanate and aliphatic mono-carboxylic acids having at least 6 carbon atoms), etc., and their mixtures.

In the practice of the present invention, the monoisocyanate is introduced into the reaction mixture in the form of a mixture with the diisocyanate.

The proportions of the monoisocyanate and the diisocyanate in this mixture are such that per 10 equivalents of -NCO, from 3 to 9.5, and preferably from 6 to 9.5 -NCO equivalents are contributed by the diisocyanate, and from 0.5 to 7, preferably from 0.5 to 4 -NCO equivalents are derived from by monoisocyanate.

Preferably, a variable amount of a mixture of hexamethylene-diisocyanate (HDI) and of octadecyl-isocyanate is used, the concentration of active -NCO groups ranging from 0.2 to 10, and particularly from 1 to 7 equivalents per 100 mols of lactam.

The amount of the mixture of the activator (diisocyanate) and the promoter of the polymerisation rate (monoisocyanate) to be employed depends on the amount of polyoxyalkylene amine used (if any), and generally is such that the total concentration of the active functions (the total number of NCO equivalents) is at least equal to the total concentration of the $NH_2$ groups present in the system.

Preferably, the ratio of the total number of NCO equivalents to the number of $NH_2$ equivalents is higher than 1, and particularly is within the range of from 1.05 to 2.

As a function of the ratio of the mixture of monoisocyanate and diisocyanate to the modifier (the polyoxyalkylene amine) and of the working conditions used, a copolymer having a repeating block structure (polyamide 6 and elastomeric segment), or a mixture of homopolymer and copolymer with alternating repeating segments can be obtained.

It has been demonstrated that when the ratio $NCO/NH_2$ is higher than 1, an improvement in the physico-mechanical properties of the resulting copolymer can be obtained.

With a ratio higher than about 1.5 an impact strength is achieved which is significantly higher than that of the polyamide homopolymer (with 20% of JEFFAMINE® D 2000 the value of the Izod resilience with

EP 0 350 843 B1

notch ranges from 60 to 500 J/m) without any significant decrease in the value of the flexural modulus (elastic modulus at bending) ( >1000 MPa).

In general, the products obtainable by the process according to the present invention are endowed with very good colour characteristics, showing a yellowing index, as determined according to ASTM D 1925-70, not higher than -15.

Furthermore, as already mentioned, the important, surprising and unexpected feature of the present invention is that the presence of monoisocyanate in admixture with the diisocyanate under otherwise identical conditions allows to increase the reaction rate as compared to the preparation of the corresponding polyamide in which only diisocyanate is used as activator instead of the mixture. Therefore, considerably shorter molding cycles can be achieved with the process of the present invention.

In the present invention it is preferred that the components of the formulation are mixed with one another and then melted before being placed in the mould inside which the polymerization is to take place.

The components preferably are distributed in two melting tanks, one of which containing a portion of the ω-lactam and the activator, and the other containing the residual ω-lactam and the catalyst.

The polyoxyalkylene amine indifferently can be placed in either tank.

In a first preferred embodiment of the present invention, the mixture of the isocyanates with blocked isocyanate groups, the ω-lactam and the polyoxyalkylene amine are mixed and melted at a temperature not higher than 110°C, and to the mixture thus obtained the catalyst in molten ω-lactam is added. The polymerization temperature is then increased to a value not lower than 120°C.

In a second preferred embodiment, a mixture of the polyoxyalkylene amine, the molten ω-lactam and the alkaline catalyst is added to the mixture of the isocyanates with blocked isocyanate groups dissolved in molten ω-lactam, at a temperature not higher than 110°C. The polymerisation temperature is then increased up to a value not lower than 120°C.

The melting temperature preferably ranges from 75°C to 110°C.

The two streams leaving the tanks are metered by means of a suitable metering device, are mixed with each other in the desired proportions, and are then fed to the mould. The polymerization takes place inside said mould at a temperature preferably ranging from 120°C to 250°C, and more preferred of from 130°C to 160°C, usually within a few minutes. If the process is carried out at a temperature lower than the polyamide softening temperature, the formed polymer can easily be removed from the mould already as a finished article.

The polymerization can be carried out in the presence of reinforcing agents, such as fiberglass of various sizes, fabrics and mineral fillers behaving as inert substances and not interfering with the polymerization.

The use of fiberglass generally is advantageous when the stiffness of the manufactured article is to be increased.

The present formulations are particularly suitable for the production of a wide range of manufactured articles, such as flat sheets of various thicknesses, semifinished articles, massive objects of various shapes, rods, tubes, vessels, and various articles in general.

In particular, the present formulations are suitable for obtaining flat parts, particularly parts having a large linear extension, of car bodyworks, by means of the RIM (Reaction Injection Moulding) technology or rotational moulding.

The following examples are given in order to illustrate the present invention without, however, limiting it.

EXAMPLE 1

Inside a jacketed tank heated at 90°C, equipped with stirring means and with bottom drain means, 213 g of ε-caprolactam (CPL) and 21.5 g of catalyst [Na caprolactamate (Na-CPL), 20% in CPL] were melted under a nitrogen atmosphere. After a temperature of 90°C had been reached, always under nitrogen atmosphere, 15.5 g of activator (consisting of 10 g of caprolactam-blocked hexamethylene-diisocyanate (33% in caprolactam) and 5.5 g of caprolactam-blocked octadecyl-isocyanate, 25% in caprolactam) were added to the mixture, and 2 minutes later a flat mould of 210 x 210 x 3.5 mm, preheated at 156°C, was filled with the resulting mixture.

After 1 minute and 30 seconds the polymerization of the mixture was complete and the mould was opened.

A polymer was obtained which showed an impact strength (Izod method with notch according to ASTM D 256) at 23°C of 24 J/m, and an elastic modulus at bending (ASTM D 790) of 3,212 MPa, determined on the dry product.

4

EXAMPLE 2

Example 1 was repeated, changing only the proportions of the components, while keeping the total amount of said components constant (250 g). The compositions of the formulations used, the times and conditions of polymerization, and the properties of the resulting polymer are reported in Table 1.

EXAMPLE 3

Inside a jacketed tank heated at 90°C, equipped with stirring means and with bottom drain means, 160 g of ε-caprolactam (CPL), 15 g of catalyst [Na caprolactamate (Na-CPL), 20% in CPL] and 50 g of JEFFAMINE® D 2000 were melted under a nitrogen atmosphere.

After the temperature had reached 90°C, still under nitrogen atmosphere, 25 g of activator (consisting of 20.75 g of caprolactam-blocked hexamethylene-diisocyanate (33% in caprolactam) and 4.25 g of caprolactam-blocked octadecyl-isocyanate, 25% in caprolactam) were added to the mixture, and 2 minutes later a flat mould of 210 x 210 x 3.5 mm, preheated at 156°C, was filled with the resulting mixture.

After 2 minutes and 30 seconds the polymerization was complete and the mould was opened.

A polymer was obtained, which showed an impact strength (Izod method with notch according to ASTM D 256) at 23°C of 167 J/m, and an elastic modulus at bending (ASTM D 790) of 1,323 MPa, determined on the dry product.

EXAMPLES 4-8 and COMPARATIVE EXAMPLES

Example 3 was repeated with different reaction parameters, also varying the proportions of the reactants while keeping the total amount of the reactants always at 250 g.

Comparative Example 1 relates to a composition of reactants which did not contain JEFFAMINE® D 2000 and wherein the activator consisted of only hexamethylene-diisocyanate.

Comparative Example 2, on the contrary, relates to a composition which also contained the modifier (JEFFAMINE® D 2000).

The compositions of the formulations used, the polymerization times and the mechanical characteristics of the resulting polymers are summarized in Table 1.

EP 0 350 843 B1

T a b l e   1

| EXAMPLES | | 1 | 2 | 3 | 4 | 5 | 6 | 7 | 8 | Comparative Example 1 | Comparative Example 2 |
|---|---|---|---|---|---|---|---|---|---|---|---|
| - Caprolactam (CPL) | % by weight | 85.1 | 83.4 | 64 | 62.9 | 64 | 62.9 | 69 | 69 | 86.8 | 65.3 |
| - Na-CPL (at 20% in CPL) | % by weight | 8.7 | 8.7 | 6 | 6 | 6 | 6 | 6.7 | 6.7 | 2.1 | 6 |
| - Activator (HDI at 33% in CPL) (*) | % by weight | 4 | 3.7 | 8.3 | 7.8 | 8.3 | 7.8 | 4.3 | 4.3 | 4.5 | 8.7 |
| - Activator ($C_{18}H_{37}NCO$ at 25% in CPL) (**) | % by weight | 2.2 | 4.2 | 1.7 | 3.3 | 1.7 | 3.3 | 10 | 10 | -- | -- |
| - JEFFAMINE D 2000 (functionality 1.9) | % by weight | -- | -- | 20 | 20 | 20 | 20 | 10 | 10 | -- | 20 |
| Mixer temperature | °C | 90 | 90 | 90 | 90 | 90 | 90 | 90 | 90 | 90 | 90 |
| Mould temperature | °C | 150 | 150 | 140 | 140 | 150 | 150 | 140 | 150 | 150 | 150 |
| Mould opening time | | 1 m 30 s | 1 m 20 s | 2 m 30 s | 2 m 20 s | 2 m 30 s | 2 m | 2 m | 2 m | 3 m 30 s | 3 m |
| Impact strength, IZOD Method with notch on dry product at +23°C, ASTM D 256 | J/m | 24.0 | 24.0 | 167 | 162 | 551 | 242 | 58 | 63 | 24 | 727 |
| Elastic modulus at bending on dry product, ASTM D 790 | MPa | 3212 | 3145 | 1353 | 1277 | 1323 | 1407 | 2352 | 2369 | 3327 | 1883 |

(*)   The concentration relates to HDI with non-blocked isocyanate groups.

(**)   The concentration relates to $C_{18}H_{37}NCO$ with non-blocked isocyanate groups.

## Claims

1. Process for preparing polyamides, comprising the polymerization of at least one ω-lactam in the presence of:

a) a mixture of at least one diisocyanate and at least one monoisocyanate, the isocyanate groups of both types of compounds being blocked with an $\omega$-lactam;
b) optionally, at least one polyoxyalkylene amine having an amine functionality of less than 3; and
c) an alkaline catalyst.

2. Process according to claim 1, wherein the mixture of the isocyanates with blocked isocyanate groups, the $\omega$-lactam and the polyoxyalkylene amine are mixed and melted at a temperature not higher than 110°C and the alkaline catalyst in molten $\omega$-lactam is added to the resulting mixture, the temperature then being increased to at least 120°C.

3. Process according to claim 1, wherein a mixture of the polyoxyalkylene amine, the molten $\omega$-lactam and the alkaline catalyst is added to a mixture of the isocyanates with blocked isocyanate groups dissolved in molten $\omega$-lactam at a temperature not higher than 110°C, the temperature then being increased to at least 120°C.

4. Process according to any one of claims 2 and 3, wherein the mixing temperature ranges from 75°C to 100°C and the polymerisation temperature is within the range of from 120°C to 250°C, preferably of from 130°C to 160°C.

5. Process according to any one of claims 1 to 4, wherein the polyoxyalkylene amine, preferably a polyoxypropylene diamine or a polyoxytetramethylene diamine, has an amine functionality of from 1.5 to 2.9 and preferably has a molecular weight within the range of from 200 to 5000.

6. Process according to any one of claims 1 to 5, wherein the amount of polyoxyalkylene amine ranges from 1% to 40%, preferably from 5% to 30% by weight, based on the total amount of the reactants.

7. Process according to any one of claims 1 to 6, wherein the $\omega$-lactam is selected from $\gamma$-butyro-lactam, $\delta$-valero-lactam, $\epsilon$-capro-lactam, $\omega$-enantho-lactam, $\omega$-capryl-lactam, $\omega$-undecano-lactam and $\omega$-lauryl-lactam and combinations thereof, and particularly consists of $\epsilon$-capro-lactam and/or $\omega$-lauryl-lactam.

8. Process according to any one of claims 1 to 7, wherein the diisocyanate is an aliphatic diisocyanate, a cycloaliphatic diisocyanate, an aromatic diisocyanate or a mixture of any of these diisocyanates, particularly a mixture of an aliphatic diisocyanate and an aromatic diisocyanate.

9. Process according to claim 8, wherein the aliphatic diisocyanate is hexamethylene diisocyanate (HDI) or trimethyl-hexamethylene-diisocyanate (TMDI).

10. Process according to any one of claims 1 to 9, wherein the monoisocyanate is an aliphatic monoisocyanate containing from 1 to 20 carbon atoms, and preferably is octadecyl-isocyanate.

11. Process according to any one of claims 1 to 10, wherein the monoisocyanate and the diisocyanate are contained in the mixture in proportions such that from 30 to 95%, and preferably from 60 to 95% of the total of -NCO equivalents are contributed by the diisocyanate.

**Patentansprüche**

1. Verfahren zur Herstellung von Polyamiden, welches die Polymerisation von mindestens einem $\omega$-Lactam umfaßt in Gegenwart von:
a) einer Mischung mindestens eines Diisocyanats und mindestens eines Monoisocyanats, wobei die Isocyanatgruppen beider Verbindungstypen mit einem $\omega$-Lactam blockiert sind,
b) fakultativ mindestens einem Polyoxyalkylenamin mit einer Aminfunktionalität unter 3 und
c) einem alkalischen Katalysator.

2. Verfahren nach Anspruch 1, worin die Mischung der Isocyanate mit blockierten Isocyanatgruppen, das $\omega$-Lactam und das Polyoxyalkylenamin gemischt und bei einer Temperatur nicht über 110°C geschmolzen werden und der alkalische Katalysator in geschmolzenem $\omega$-Lactam der resultierenden Mischung zugesetzt wird, wobei die Temperatur dann auf mindestens 120°C erhöht wird.

3. Verfahren nach Anspruch 1, worin eine Mischung des Polyoxyalkylenamins, des geschmolzenen ω-Lactams und des alkalischen Katalysators bei einer Temperatur nicht über 110 °C einer Mischung der Isocyanate mit blockierten Isocyanatgruppen, die in geschmolzenem ω-Lactam gelöst ist, zugesetzt wird, wobei die Temperatur dann auf mindestens 120 °C erhöht wird.

4. Verfahren nach irgendeinem der Ansprüche 2 und 3, worin die Mischungstemperatur zwischen 75 °C und 100 °C liegt und die Polymerisationstemperatur im Bereich von 120 °C bis 250 °C liegt, vorzugsweise zwischen 130 °C und 160 °C.

5. Verfahren nach irgendeinem der Ansprüche 1 bis 4, worin das Polyoxyalkylenamin, vorzugsweise ein Polyoxypropylendiamin oder ein Polyoxytetramethylendiamin, eine Aminfunktionalität von 1.5 bis 2.9 aufweist und vorzugsweise ein Molekulargewicht im Bereich von 200 bis 5000 besitzt.

6. Verfahren nach irgendeinem der Ansprüche 1 bis 5, worin die Menge an Polyoxyalkylenamin 1 Gew.-% bis 40 Gew.-%, vorzugsweise 5 Gew.-% bis 30 Gew.-%, bezogen auf die Gesamtmenge der Reaktanden, beträgt.

7. Verfahren nach irgendeinem der Ansprüche 1 bis 6, worin das ω-Lactam ausgewählt ist aus γ-Butyrolactam, δ-Valerolactam, ε-Caprolactam, ω-Enantholactam, ω-Capryllactam, ω-Undecanolactam und ω-Lauryllactam und deren Kombinationen und insbesondere aus ε-Caprolactam und/oder ω-Lauryllactam besteht.

8. Verfahren gemäß irgendeinem der Ansprüche 1 bis 7, worin das Diisocyanat ein aliphatisches Diisocyanat, ein cycloaliphatisches Diisocyanat, ein aromatisches Diisocyanat oder eine Mischung irgendwelcher dieser Diisocyanate ist, insbesondere eine Mischung eines aliphatischen Diisocyanats und eines aromatischen Diisocyanats.

9. Verfahren nach Anspruch 8, worin das aliphatische Diisocyanat Hexamethylendiisocyanat (HDI) oder Trimethylhexamethylendiisocyanat (TMDI) ist.

10. Verfahren nach irgendeinem der Ansprüche 1 bis 9, worin das Monoisocyanat ein aliphatisches Monoisocyanat mit 1 bis 20 Kohlenstoffatomen und vorzugsweise Octadecylisocyanat ist.

11. Verfahren nach irgendeinem der Ansprüche 1 bis 10, worin das Monoisocyanat und das Diisocyanat in der Mischung in solchen Anteilen enthalten sind, daß 30 bis 95 % und vorzugsweise 60 bis 95 % der gesamten -NCO-Äquivalente vom Diisocyanat beigetragen werden.

**Revendications**

1. Procédé de préparation de polyamides comprenant la polymérisation d'au moins un ω-lactame en présence de:
   a) un mélange d'au moins un diisocyanate et au moins un monoisocyanate, les groupes isocyanate des deux types de dérivés étant bloqués par un ω-lactame;
   b) éventuellement au moins une polyoxyalkylène amine ayant une fonctionnalité amine inférieure à 3; et
   c) un catalyseur alcalin.

2. Procédé selon la revendication 1, caractérisé en ce que le mélange des isocyanates dont les groupes isocyanates sont bloqués, l'ω-lactame et la polyoxyalkylène amine sont mélangés et fondu à une température qui n'est pas supérieure à 110°C, et le catalyseur alcalin dans de l'ω-lactame fondu est ajouté au mélange ainsi obtenu, la température étant alors augmentée jusqu'à une valeur d'au moins 120°C.

3. Procédé selon la revendication 1, caractérisé en ce qu'un mélange constitué de la polyoxyalkylène amine, de l'ω-lactame fondu et du catalyseur alcalin est ajouté à un mélange des isocyanates dont les groupes isocyanate sont bloqués qui est dissout dans de l'ω-lactame fondu, à une température qui n'est pas supérieure à 110°C, la température étant alors augmentée jusqu'à une valeur d'au moins 120°C.

**4.** Procédé selon l'une quelconque des revendications 2 et 3, caractérisé en ce que la température de mélange est comprise entre 75°C et 100°C et la température de polymérisation est comprise entre 120°C et 250°C, de préférence entre 130°C et 160°C.

**5.** Procédé selon l'une quelconque des revendications 1 à 4, caractérisé en ce que la polyoxyalkylène amine qui est de préférence une polyoxypropylène diamine ou une polyoxytétraméthylène diamine, présente une fonctionnalité comprise entre 1,5 et 2,9 et un poids moléculaire compris de préférence entre 200 et 5000.

**6.** Procédé selon l'une quelconque des revendications 1 à 5, caractérisé en ce que la quantité de polyoxyalkylène amine est comprise entre 1% et 40%, de préférence entre 5 et 30% en poids par rapport à la quantité totale des réactifs.

**7.** Procédé selon l'une quelconque des revendications 1 à 6, caractérisé en ce que l'ω-lactame est choisi parmi ω-butyro-lactame, δ-valéro-lactame, δ-capro-lactame, ω-énantho-lactame, ω-capryl-lactame, ω-undécano-lactame et ω-lauryl-lactame et leurs mélanges et qu'il est en particulier constitué de ε-capro-lactame et/ou d'ω-lauryl-lactame.

**8.** Procédé selon l'une quelconque des revendications 1 à 7, caractérisé en ce que le diisocyanate est un diisocyanate aliphatique, un diisocyanate cycloaliphatique, un diisocyanate aromatique ou un mélange quelconque de ces diisocyanates, en particulier un mélange d'un diisocyanate aliphatique et d'un diisocyanate aromatique.

**9.** Procédé selon la revendication 8, caractérisé en ce que le diisocyanate aliphatique est le diisocyanate d'hexaméthylène (HDI) ou le diisocyanate de triméthylhexaméthylène (TMDI).

**10.** Procédé selon l'une quelconque des revendications 1 à 9, caractérisé en ce que le monoisocyanate est un monoisocyanate aliphatique contenant de 1 à 20 atomes de carbone, et il correspond de préférence à l'isocyanate d'octadécyle.

**11.** Procédé selon l'une quelconque des revendications 1 à 8, caractérisé en ce que le monoisocyanate et le diisocyanate sont contenus dans le mélange en proportions telles que de 30 à 95% et de préférence de 60 à 95% du total des équivalents -NCO soient apportés par le diisocyanate.